# EUROPÄISCHE PATENTSCHRIFT

(11) **EP 1 622 243 B1**
(45) Veröffentlichungstag und Bekanntmachung des Hinweises auf die Patenterteilung: **16.12.2009**
(21) Anmeldenummer: 04018133.1
(22) Anmeldetag: 30.07.2004
(51) Int. Cl.: H02K 9/14, F04D 25/08

(54) **Elektromotor**
Electric motor
Moteur électrique

(43) Veröffentlichungstag der Anmeldung: 01.02.2006
(73) Patentinhaber: Brose Fahrzeugteile GmbH & Co. KG, Würzburg, 97076 Würzburg (DE)
(72) Erfinder: De Filippis, Pietro, 20124 Milano (IT); Egerland, Markus, 97218 Gerbrunn (DE); Kemmer, Detlef, 97237 Altertheim (DE); McLennan, Paul Stephen, N6H 5R9 London Ontario (CA); Redelberger, Harald, 97273 Kürnach (DE)
(74) Vertreter: Reinhard - Skuhra - Weise & Partner GbR

(56) Entgegenhaltungen:
- EP-A- 0 569 738
- EP-A- 0 776 081
- EP-A- 1 050 682
- DE-A- 4 143 383
- DE-U- 9 321 100
- GB-A- 2 160 924

## Beschreibung

Die Erfindung betrifft einen Elektromotor mit feststehendem Außen-Stator, einem Innen-Rotor und Einrichtungen zur Eigenkühlung, beispielsweise zur Verwendung als Kühlerlüfterantrieb in einem Kraftfahrzeug.

Für einen sicheren Betrieb von Elektromotoren ist es erforderlich, dass die verwendeten Materialien bei gegebenen Betriebsbedingungen nicht überhitzt werden. Es muss Sorge dafür getragen werden, dass bei Umgebungstemperatur während des Betriebes des Elektromotors mit maximaler Verlustleistung keine Überhitzung eintritt. Bei Nichtbeachtung kann dies zu einer Verringerung der Lebensdauer des Elektromotors oder zu einem Totalausfall des Elektromotors führen.

Daher ist das Kühlen oder Entwärmen des Elektromotors, also das Abführen der Verlustwärme, insbesondere aus der Wicklung, und dem elektromagnetisch aktiven Eisenmaterial von großer Bedeutung.

Bei beispielsweise zum Antrieb von Lüftern verwendeten Elektromotoren ist es bekannt, einen Luftstrom durch den Elektromotor zu führen, indem ein Druckunterschied zwischen Lufteintrittsöffnungen des Elektromotors und Luftaustrittsöffnungen genutzt wird um einen Kühlluftstrom zu erzeugen

So zeigt beispielsweise die europäische Patentanmeldung EP 1 050 682 A2 einen Lüfterantrieb, mit einem feststehenden mit Wicklungen versehenen Innen-Stator und einem permanentmagnetisch erregten Außen-Rotor. Eine Steuerelektronik befindet sich auf der Außenseite des Statorfußes und ist mit einem separaten Deckel abgedeckt. Eine drehfest mit dem Außen-Rotor verbundene Lüfternabe erzeugt im Betrieb ein Kühlluftstrom durch auf der Innenseite der Lüfternabe angeordnete innere Ventilationsflügel. Der Kühlluftstrom tritt seitlich zwischen dem Statorfußteil und dem Rotorrand in den Motorinnenraum ein und durch Öffnungen im Randbereich des Rotorbodens und den Zwischenraum zwischen Statoraußenwand und Lüfternabe in die Umgebung aus. Dabei kann der Kühlluftstrom lediglich im Motorgehäuseinnenraum von den Statorwicklungen Wärmeenergie aufnehmen und in den Außenraum abführen. Der Kühlluftstrom kann so nur sehr eingeschränkt Wirkung entfalten.

Gleiches gilt für den in dem Dokument EP 0 569 738 A1 offenbarten Gegenstand. Bei diesem handelt es sich um einen feststehenden, permanenterregten Außen-Stator in Kombination mit einem eine Bewicklung aufweisenden Innen-Rotor. Hier kann der ausgebildete Kühlluftstrom ebenfalls nur im Motorgehäuseinnenraum die von der Wicklung und dem elektromagnetisch beaufschlagten Eisenmaterial erzeugte Verlustwärme aufnehmen. Eine direkte Ableitung der in der Wicklung erzeugten Verlustwärme über den Außen-Stator auf die Außenseite des Motorgehäuses ist nur in sehr eingeschränktem Umfang gegeben.

Aufgabe der Erfindung ist es, die Kühlung eines Elektromotors zu verbessern und somit seine thermische Robustheit zu erhöhen. Diese Aufgabe wird durch einen Elektromotor mit den Merkmalen des Anspruchs 1 gelöst.

Die Erfindung basiert auf dem Grundgedanken, die Kühlung eines Elektromotors dadurch zu verbessern, dass das den Elektromotor umfassende Motorgehäuse als Kühlkörper zur Abgabe von Verlustwärme der Wicklung an einen Kühlluftstrom mitbenutzt wird. Dazu wird der Kühlluftstrom durch das Motorgehäuse hindurch und in einem Luftspalt zwischen einem Lüftertopf und dem Motorgehäuse an dessen Außenseite entlang geführt.

Erfindungsgemäß handelt es sich um einen Elektromotor mit drehbarem Innen-Rotor und einem feststehenden, eine Bewicklung aufweisenden elektromagnetisch erregten Außen-Stator. Im Gegensatz zu einem Elektromotor mit einem permanenterregten Außen-Stator wird hier Verlustwärme der Wicklung und des elektromagnetisch beaufschlagten Eisenmaterials direkt an das Motorgehäuse, welches wärmeleitend mit dem Außen-Stator verbunden ist, nach außen abgeführt.

Der Kühlluftstrom wird im Betrieb durch den von dem Elektromotor angetriebenen Lüftertopf mit Hilfe von Ausformungen, welche sich im Luftspalt und/oder in Anschluss an den Luftspalt erstrecken und als Luftschaufeln wirken ausgebildet. Die Ausformungen des Lüftertopfes sind dabei so angeordnet, dass bei drehendem Rotor ein Druckunterschied zwischen der außerhalb des Luftspaltes angeordneten Durchlüftungsöffnung und der Luftspaltöffnung ausgebildet ist, der ein Luftstrom zur Kühlung des Außen-Stators erzeugt, der sowohl im Motorgehäuse-Innenraum direkt am Stator vorbei als auch im Luftspalt auf der Außenseite der Motorgehäuse-Außenwand vorbei fließt. Das Motorgehäuse weist dazu Durchlüftungsöffnungen auf, durch die der Kühlluftstrom in das Motorgehäuse hinein und auch wieder aus diesem heraus fließen kann. Anzahl, Form und Anordnung der Durchlüftungsöffnungen kann dabei je nach Bedarf und Gehäusegeometrie variieren, bis hin zur kompletten Öffnung zum Beispiel einer Stirnseite des Motorgehäuses.

Die Fließrichtung des Kühlluftstromes und somit die Reihenfolge in welcher der Kühlluftstrom den Gehäuse-Innenraum und die Gehäuse-Außenwand überstreicht ist dabei von der Ausgestaltung und Anordnung der als Luftschaufeln wirkenden Ausformungen des Lüftertopfes und von dessen Drehrichtung abhängig.

Die Kühlung des Außen-Stators, also der Wicklung und des elektromagnetisch aktiven Eisenmaterials des Elektromotors, umfasst dabei erfindungsgemäß sowohl den Fall, dass der Kühlluftstrom einen Teil der erzeugten Verlustwärme beim Durchströmen des Motorgehäuseinnenraumes aufnimmt, als auch den Fall, dass der Kühlluftstrom einen weiteren Teil der erzeugten Verlustwärme an der Außenseite des Motorgehäuses aufnimmt und in die Umgebung abführt.

Das Abführen von Verlustwärme aus der thermisch belasteten Wicklung ist somit im Vergleich zu einem herkömmlichen Elektromotor wesentlich verbessert. Die verbesserte Kühlung des Elektromotors erlaubt bei gleicher Leistung einen kleineren Bauraum oder bei gleichem Bauraum eine erhöhte Leistung. Zugleich wird eine hohe Betriebsdauer des Elektromotors gewährleistet. Ausfälle des Elektromotors aufgrund einer Überhitzung werden vermieden.

Vorteilhafte Ausgestaltungen der Erfindung sind in den Unteransprüchen beschrieben.

In vorteilhafter Weise sind innerhalb des Luftspaltes zwischen Lüftertopfwand und Motorgehäuse und/oder in den an den Luftspalt angrenzenden Bereichen auf der Motorgehäuse-Außenseite Ausformungen angeordnet, welche die wärmeabgebende Oberfläche des Motorgehäuses vergrößern. Diese Ausformungen, insbesondere Kühlrippen oder Kühlzapfen werden vom Kühlluftstrom überströmt und dienen als Kühlelemente. Gleichzeitig tragen diese Kühlelemente zusätzlich zur Verwirbelung des Kühlluftstromes bei, da sich der Lüftertopf relativ zu dem feststehenden abtriebsseitigen Gehäuseteil dreht. Durch diese Anordnung kann beim Durchströmen des Kühlluftstromes durch den umlaufenden Luftspalt und/oder beim Ein- oder Austreten des Luftstromes in oder aus der Luftspaltöffnung noch mehr Abwärme aufgenommen und abgeführt werden. Dadurch wird die thermische Robustheit des Elektromotors weiter gesteigert.

Weitere Vorteile lassen sich erzielen, indem einzelne Statorzähne des Außen-Stators nach Art einer Einzelzahnbewicklung bewickelt sind. Dabei sind die am Außen-Stator radial nach innen angeordneten Statorzähne einzeln jeweils von einer Spule umfasst, wobei die Drahtwindungen der Spulen in den zwischen den Statorzähnen liegenden Nuten angeordnet sind. Da die Nuten fertigungstechnisch bedingt ohnehin nicht vollständig mit Drahtwindungen befüllt werden können, bleiben Nutenschlitze zwischen den einzelnen Statorzähnen frei. Der Vorteil dieser Art Bewicklung ist, dass keine stirnseitigen, die Nuten überdeckenden Wickelköpfe ausgebildet werden und so die Nutenschlitze auf beiden Stirnseiten des Stators offen sind. Dies ermöglicht dem Kühlluftstrom ein nahezu ungehindertes Durchfließen durch die Nutenschlitze, in direktem Kontakt und in axialer Richtung an den Drahtwindungen der Bewicklung entlang. Dabei nimmt der Kühlluftstrom in den stromdurchflossenen Drahtwindungen erzeugte Verlustwärme auf. Diese Maßnahme vergrößert die vom Kühlluftstrom überströmte Oberfläche innerhalb des Motorgehäuses. Darüber hinaus wird durch das nahezu ungehinderte Durchfließen des Kühlluftstromes durch die Nutenschlitze ein erhöhter Luftdurchsatz ermöglicht. Beide Merkmale erhöhen die Abgabe von Verlustwärme an den Kühlluftstrom und somit ebenfalls die thermische Robustheit.

In weiterer vorteilhafter Ausführung weist der Elektromotor einen permanentmagneterregten Innen-Rotor auf. Ein solcher Rotor hat die Eigenschaft selbst nahezu keine Verlustwärme zu erzeugen. Dies hat den Vorteil, dass der Kühlluftstrom im Motorgehäuseinnenraum nicht mit zusätzlicher Wärme belastet wird und voll zur Aufnahme von Verlustwärme aus dem bewickelten Außen-Stator genutzt werden kann. Weiterhin kann ein solcher Rotor selbst weitgehend luftundurchlässig gestaltet sein. Dies zwingt den nahezu vollständigen Kühlluftstrom dazu an der Bewicklung des Außen-Stators vorbei und ggf. durch die Nutenschlitze zwischen den Statorzähnen zu fließen, wodurch der Luftdurchsatz durch den Verlustwärme erzeugenden Stator und somit die Abgabe von Verlustwärme an den Kühlluftstrom erhöht und die Kühlung des Elektromotors verbessert wird.

Durch die Anordnung zumindest der Durchlüftungsöffnungen der ersten, rückseitigen Motorgehäusestirnseite mit im Wesentlichen gleichem radialem Abstand zur Rotorachse wie die Bewicklung, die Nuten oder die Nutenschlitze des Stators, lassen sich weitere Vorteile für die Kühlung des Elektromotors und insbesondere des Wärme erzeugenden Stators erzielen. Bei dieser Anordnung der Durchlüftungsöffnungen trifft der in den Motorgehäuseinnenraum eintretende Kühlluftstrom unmittelbar auf die Wicklung und/oder auf die zwischen den Statorzähnen angeordneten Nutenschlitze. Die dadurch erzielte ungehinderte, gezielte Anströmung der Wärme erzeugenden Statorbauteile durch die aus der Umgebung einfließende Luft gewährleistet eine effiziente Wärmeabgabe an den Kühlluftstrom und trägt zur Erhöhung des Luftdurchsatzes und somit zu einer verbesserten Kühlung bei.

In weiterer vorteilhafter Ausführung ist das Motorgehäuse oder zumindest der Teil des Motorgehäuses, der wärmeleitend mit dem Außen-Stator verbunden ist als Leichtmetall-Druckgussteil ausgeführt. Insbesondere können dazu Aluminium- oder Magnesiumlegierungen herangezogen werden. Die Verwendung von Druckgussteilen erlaubt dabei die Herstellung einer verhältnismäßig komplizierten Gehäusegeometrie in wenigen Arbeitsgängen, wie sie bei der Verwendung von herkömmlichen Stanzbiegeteilen oder tiefgezogenen Stahlgehäusen nicht möglich ist. Darüber hinaus verfügen diese Materialien über sehr gute Wärmeleitwerte, wodurch das Abführen der Verlustwärme über das Motorgehäuse nach außen weiter verbessert wird.

Zusätzlich vorteilhaft können die Ausformungen des Lüftertopfes, die als Luftschaufeln wirken, in radialer und/oder axialer Richtung gerade oder gekrümmt auf der Innenseite des Lüftertopfes verlaufen und der Kontur des Motorgehäuses mit geringem Abstand angepasst sein. Dadurch wird der Effekt der den Luftdruckunterschied erzeugt verstärkt. Die Luft im Luftspalt wird so möglichst vollständig von den Luftschaufeln erfasst und in Umfangsrichtung beschleunigt. Die Zentrifugalkraft beschleunigt die Luft gleichzeitig in radialer Richtung von der Motorachse weg. Durch einen in radialer Richtung gekrümmten Verlauf der Luftschaufeln auf dem Lüftertopfboden nach Art von Luftschaufeln eines Radiallüfters bilden sich zusätzlich Luftdruckunterschiede an den Lüfterschaufeln aus, die den Luftstrom zusätzlich beschleunigen. Dadurch wird der Luftdruckunterschied insgesamt und somit der Luftdurchsatz erhöht, was wiederum zu einer verbesserten Kühlung des Elektromotors führt.

Wenn der erfindungsgemäße Elektromotor als Antrieb für ein Kühlgebläse Anwendung findet, kann der Lüftertopf gleichzeitig als Nabe eines Gebläserades dienen. Das Gebläserad weist dabei Gebläseblätter zum Erzeugen eines Gebläse-Luftstromes auf, die auf der Außenseite des als Gebläseradnabe dienenden Lüftertopfes angeordnet sind. Der durch Drehung des Gebläserades erzeugte Gebläse-Luftstrom überströmt dann die Außenseite des Lüftertopfes. Durch die erhöhte Strömungsgeschwindigkeit des Gebläse-Luftstromes im Bereich der Luftspaltöffnung entsteht ein Venturi-Effekt, der im Bereich der Luftspaltöffnung einen Unterdruck erzeugt. Bei so gewählter Fließrichtung des Kühlluftstromes, dass dieser nach Durchfließen des Gehäuseinnenraumes durch die Luftspaltöffnung in die Umgebung austritt, wirkt der Venturi-Effekt verstärkend auf den Kühlluftstrom. Dies hat wiederum einen erhöhten Luftdurchsatz und somit eine bessere Kühlung des Elektromotors zur Folge.

Die vorliegende Erfindung wird nachfolgend anhand eines Ausführungsbeispieles beschrieben, das mit Hilfe von schematischen Zeichnungen näher erläutert wird. Hierbei zeigen:
- Figur 1: eine vereinfachte schematische Darstellung eines erfindungsgemäßen Elektromotors,
- Figur 2: eine Draufsicht auf eine Ausführung des Elektromotors 1 von der einem Lüftertopf (in Figur 2 nicht sichtbar) abgewandten Seite her, bei abgenommenem Gehäusedeckel,
- Figur 3: eine perspektivische Darstellung der Außenseite eines Motorgehäuses mit Kühlrippen und Kühlzapfen,
- Figur 4: die Draufsicht auf die Innenseite eines Lüftertopfes und
- Figur 5: eine perspektivische Darstellung eines Lüftertopfes, der gleichzeitig Nabe eines Gebläserades ist.
Funktions- und benennungsgleiche Gegenstände sind in den Figuren durchgängig mit denselben Bezugszeichen gekennzeichnet.

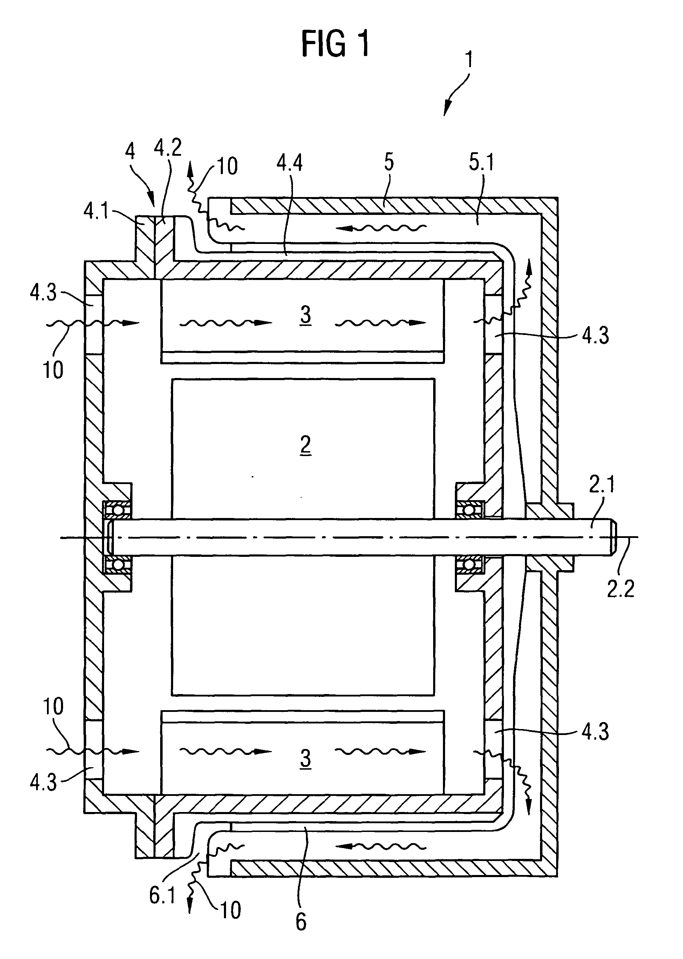

In Figur 1 ist ein erfindungsgemäßer Elektromotor 1 in einer stark vereinfachten schematischen Darstellung abgebildet.

Der Elektromotor 1 weist im Wesentlichen einen Innen-Rotor 2, einen Außen-Stator 3, ein Motorgehäuse 4 und einen Lüftertopf 5 auf. Der Innen-Rotor 2 ist drehfest mit einer Rotorwelle 2.1 verbunden und über diese um eine Rotorachse 2.2 drehbar im Motorgehäuse 4 gelagert. Der Lüftertopf 5 ist ebenfalls drehfest mit der Rotorwelle 2.1 verbunden und dreht sich im Betrieb mit dem Innen-Rotor 2. Das Motorgehäuse 4 besteht aus einen Gehäusetopf 4.2 und einem Gehäusedeckel 4.1 und weist Durchlüftungsöffnungen 4.3 auf. Die Durchlüftungsöffnungen 4.3 sind im gleichen radialen Abstand zur Rotorachse 2.1 angeordnet wie die bewickelten Statorzähne des Außen-Stators 3. Der Lüftertopf 5 umfasst das Motorgehäuse 4 topfförmig und ist sowohl mit axialem als auch radialem Abstand zur Motorgehäuse-Außenseite angeordnet. Dadurch ist zwischen Motorgehäuse und Lüftertopf ein Luftspalt 6 gebildet, mit einer umlaufenden ringspaltförmigen Luftspaltöffnung 6.1 am Rand des Lüftertopfes.

Auf der Innenseite des Lüftertopfes 5 sind Luftschaufeln 5.1 angeordnet, welche sich im Luftspalt 6 bis in die Luftspaltöffnung 6.1 erstrecken. Auf der Außenseite des Gehäusetopfes 4.2 sind Kühlrippen 4.4 ausgebildet, die sich ebenfalls im Luftspalt bis in die Luftspaltöffnung erstrecken. Durch Drehung des Lüftertopfes 5 wird mit Hilfe der Luftschaufeln 5.1 ein Luftdruckunterschied zwischen den Durchlüftungsöffnungen 4.3 im Gehäusedeckel 4.1 und der Luftspaltöffnung 6.1 erzeugt. Dieser Luftdruckunterschied bildet einen Kühlluftstrom 10 aus, der durch die Durchlüftungsöffnungen 4.3 des Gehäusedeckels 4.1 in den Gehäuseinnenraum, an den Wicklungen vorbei durch den Außen-Stator 3 hindurch, durch die Durchlüftungsöffnungen 4.3 im Gehäusetopf 4.2 in den Luftspalt 6 und schließlich durch die Luftspaltöffnung 6.1 in die Umgebung strömt. Auf dem beschriebenen Weg nimmt der Kühlluftstrom 10 sowohl beim Durchströmen des Außen-Stators 3 direkt an den Wicklungen als auch auf der Außenseite des Motorgehäuses an den Kühlrippen 4.4 im Luftspalt 6 Anteile der vom Außen-Stator erzeugten Wärme auf und führt diese in die Umgebung ab.

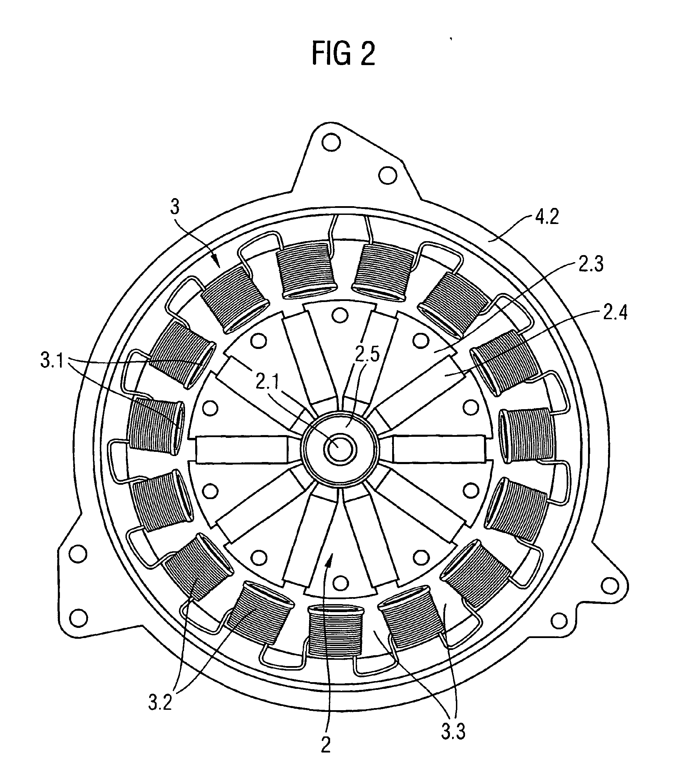

Figur 2 zeigt die Draufsicht auf eine Ausführung des Elektromotors 1 von der dem Lüftertopf (in Figur 2 nicht sichtbar) abgewandten Seite her. Der Gehäusedeckel ist abgenommen, so dass das Innere des Motors sichtbar ist. In dem Gehäusetopf 4.2 ist der Außen-Stator 3 angeordnet. Dabei ist ein wärmeleitender Kontakt und eine drehfeste Verbindung zwischen dem Gehäusetopf 4.2 und dem Außen-Stator 3 hergestellt. Dies kann beispielsweise durch Einpressen des Außen-Stators 3 in den Gehäusetopf 4.2 oder durch Einbringen einer härtenden, wärmeleitenden Masse in den Spalt zwischen Außen-Stator 3 und Gehäusetopf 4.2 erfolgen. Der Außen-Stator 3 besteht aus Eisen und weist Statorzähne 3.1 auf, die mit Einzelzahnwicklungen 3.2 aus Kupferdraht bewickelt sind. Zwischen den Statorzähnen 3.1 und deren Einzelzahnwicklungen 3.2 sind Nutenschlitze 3.3 ausgebildet, die beidstirnseitig offen sind und einen nahezu ungehinderten Luftdurchgang erlauben. Der Innen-Rotor 2 ist konzentrisch innerhalb des Außen-Stators 3 auf einer Rotorwelle 2.1 angeordnet. Die Rotorwelle 2.1 ist wiederum mit Wellenlagern 2.5 im Gehäuse gelagert. Der Innen-Rotor 2 ist ein permanentmagneterregter Rotor und weist einen aus Eisen bestehenden Rotorkern 2.3 und darin angeordnete Permanentmagnete 2.4 auf. Der Innen-Rotor ist ein weitgehend geschlossenes, massives Bauteil, das keinen wesentlichen Luftdurchtritt erlaubt. Nahezu der gesamte Kühlluftstrom 10 wird dadurch im Gehäuseinnenraum durch die Nutenschlitze 3.3 an den wärmeerzeugenden Windungen der Einzelzahnwicklungen 3.2 vorbei zwangsgeführt.

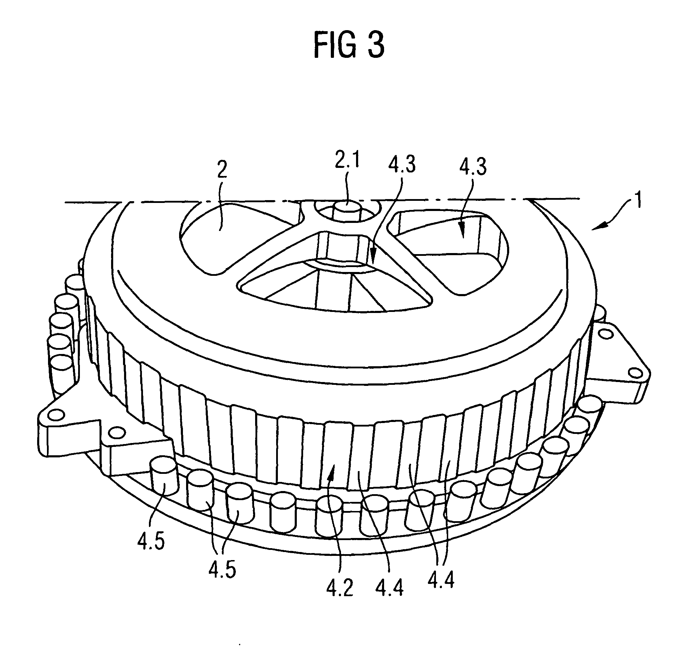

In Figur 3 ist eine perspektivische Außenansicht einer Ausführung des Elektromotors 1 ohne Lüftertopf dargestellt. Der Lüftertopf ist nicht dargestellt, um wesentliche Details des Motorgehäuses erkennen zu können. Deutlich zu erkennen sind die auf der Außenseite des Gehäusetopfes 4.2 angeordneten Ausformungen in Form von Kühlrippen 4.4 und Kühlzapfen 4.5, welche die vom Kühlluftstrom überströmte Außenfläche des Motorgehäuses vergrößern. In der sichtbaren Stirnseite des Motorgehäuses 4 sind Durchlüftungsöffnungen 4.3 angeordnet, durch die der im Gehäuse aufgenommene Innen-Rotor 2 sichtbar ist. Die Rotorwelle 2.1 ragt durch die Stirnseite des Motorgehäuses 4 nach außen. In dem in der Figur 3 sichtbaren Bereich der Rotorwelle 2.1 ist im fertig montierten Zustand des Elektromotors 1 der Lüftertopf 5 drehfest montiert.

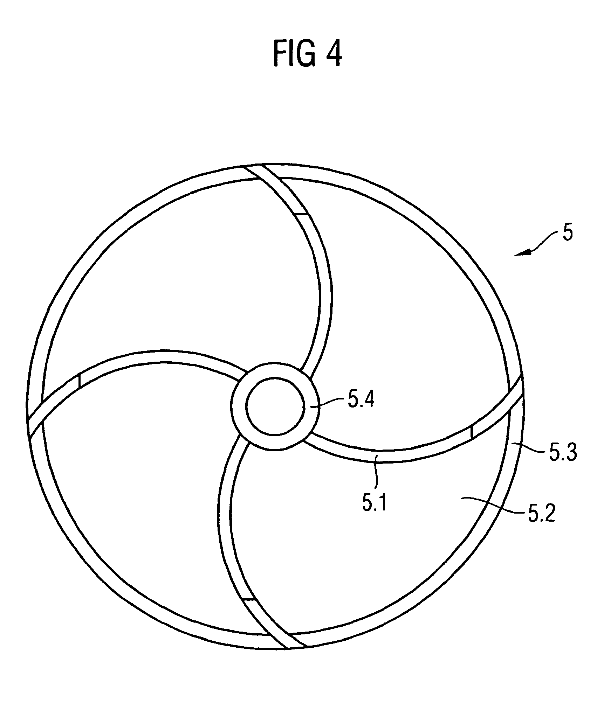

Die in Figur 4 dargestellte Draufsicht auf die Innenseite eines Lüftertopfes zeigt die auf dem Lüftertopfboden 5.2 von der Lüftertopfnabe 5.4 bis über den Lüftertopfrand 5.3 verlaufenden Luftschaufeln 5.1. In dieser speziellen Ausführung verlaufen die Luftschaufeln 5.1 in radialer Richtung spiralförmig gekrümmt von der Lüftertopfnabe 5.4 bis zum Lüftertopfrand 5.3. Die Luftschaufeln 5.1 dienen gleichzeitig als Versteifungsrippen für den Lüftertopf.

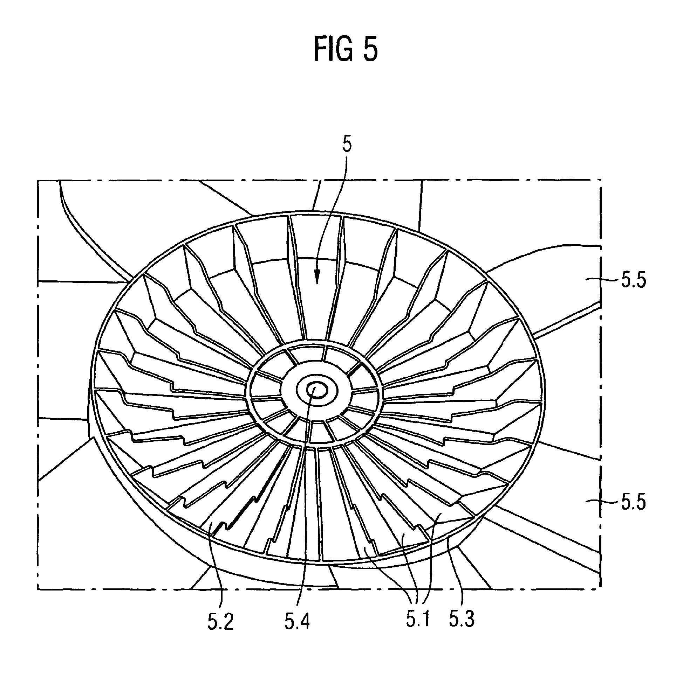

Eine perspektivische Darstellung einer weiteren Ausführung des Lüftertopfes 5 ist in Figur 5 dargestellt. Zusätzlich zu den auf der Innenseite des Lüftertopfes 5 angeordneten, radial gerade verlaufenden Luftschaufeln 5.1 sind hier auf der Außenseite des Lüftertopfrandes 5.3 Gebläseblätter 5.5 angeordnet. Diese Gebläseblätter 5.5 drehen sich mit dem Lüftertopf 5 und erzeugen einen Gebläse-Luftstrom zum Beispiel zur Kühlung eines in dem Gebläse-Luftstrom angeordneten Aggregates. Auf diese Weise dient der Elektromotor 1 als Antrieb für ein Gebläse und der Lüftertopf 5 erfüllt gleichzeitig zwei Funktionen.

## Patentansprüche

1. Elektromotor (1) bestehend aus
- einem um eine Rotorachse drehbaren Rotor (32) und einem feststehenden Stator im Innenraum eines Motorgehäuses (3) und
- einem Lüftertopf (8), wobei der Lüftertopf (8) drehfest mit dem Rotor (32) verbunden ist und das Motorgehäuse topfförmig zumindest teilweise umfasst, derart, dass zwischen Motorgehäuse-Außenwand und Lüftertopfwand ein Luftspalt mit einer Luftspaltöffnung ausgebildet ist, wobei das Motorgehäuse sowohl außerhalb als auch innerhalb des Luftspaltes Durchlüftungsöffnungen aufweist und der Lüftertopf Ausformungen aufweist, welche als Luftschaufeln wirken und die so angeordnet sind, dass bei drehendem Rotor ein Druckunterschied zwischen der außerhalb des Luftspaltes angeordneten Durchlüftungsöffnung und der Luftspaltöffnung ausgebildet ist, der ein Luftstrom erzeugt,
**gekennzeichnet dadurch,**
- **dass** der Stator ein elektromagnetisch erregter Außen-Stator ist, der elektromagnetisch aktives Eisenmaterial und eine Bewicklung aufweist und der drehfest und wärmeleitend mit der Motorgehäuse-Außenwand verbunden ist und
- **dass** der Luftstrom sowohl im Motorgehäuse-Innenraum direkt am Stator vorbei als auch im Luftspalt auf der Außenseite der Motorgehäuse-Außenwand vorbei strömt und jeweils Verlustwärme des Außen-Stators aufnimmt.

2. Elektromotor (1) nach Anspruch 1,
**dadurch gekennzeichnet, dass** die Motorgehäuse-Außenwand innerhalb des Luftspaltes und/oder in an die Luftspaltöffnung angrenzenden Bereichen Ausformungen aufweist, die als Kühlelemente wirken.

3. Elektromotor (1) nach einem der Ansprüche 1 oder 2,
**dadurch gekennzeichnet, dass** der Außen-Stator einzelne Statorzähne aufweist, die nach Art einer Einzelzahnbewicklung bewickelt sind, wodurch offene Nutenschlitze zwischen den Statorzähnen ausgebildet sind, durch die der Kühlluftstrom strömt.

4. Elektromotor (1) nach einem der Ansprüche 1 bis 3,
**dadurch gekennzeichnet, dass** der Rotor ein permanentmagneterregter Innen-Rotor ist.

5. Elektromotor (1) nach einem der Ansprüche 1 bis 4,
**dadurch gekennzeichnet, dass** zumindest eine der Durchlüftungsöffnungen auf einer Stirnseite des Motorgehäuses mit im Wesentlichen gleichem radialem Abstand zur Rotorachse angeordnet ist wie die Bewicklung des Stators.

6. Elektromotor (1) nach einem der Ansprüche 3 bis 4,
**dadurch gekennzeichnet, dass** zumindest eine der Durchlüftungsöffnungen auf einer Stirnseite des Motorgehäuses mit im Wesentlichen gleichem radialem Abstand zur Rotorachse angeordnet ist wie die Nutenschlitze zwischen den Statorzähnen.

7. Elektromotor (1) nach einem der Ansprüche 1 bis 5,
**dadurch gekennzeichnet, dass** zumindest ein wärmeleitend mit dem Außen-Stator verbundenes Motorgehäuseteil als Leichtmetall-Druckgussteil ausgeführt ist.

8. Elektromotor (1) nach einem der Ansprüche 1 bis 7, **dadurch gekennzeichnet, dass** die Ausformungen des Lüftertopfes, die als Luftschaufeln wirken, in radialer und/oder axialer Richtung gerade oder gekrümmt auf der Innenseite des Lüftertopfes verlaufen und der Kontur des Motorgehäuses mit geringem Abstand angepasst sind.

9. Elektromotor (1) nach einem der Ansprüche 1 bis 6,
**dadurch gekennzeichnet, dass** der Elektromotor als Antrieb eines Kühlgebläses verwendet wird und der Lüftertopf als Nabe eines Gebläserades dient, wobei Gebläseblätter zum Erzeugen des Gebläseluftstroms auf der Außenseite des Lüftertopfes angebracht sind.

## Claims

1. Electric motor (1) comprising
- a rotor (32), which can rotate about a rotor axis, and a stationary stator in the interior of a motor housing (3), and
- a fan pot (8), wherein the fan pot (8) is connected to the rotor (32) such that they rotate together and at least partially surrounds the motor housing in the form of a pot, such that an air gap with an air-gap opening is formed between the motor housing outer wall and the fan pot wall, wherein the motor housing has air-flow openings both outside and inside the air gap and the fan pot has formed-out areas which act as air blades and are arranged such that, when the rotor is rotating, a pressure difference is formed between the air-flow opening arranged outside the air gap and the air-gap opening, and results in an air flow,
**characterized**
- **in that** the stator is an electromagnetically excited external stator which has electromagnetically active iron material and a winding, and is connected in a rotationally fixed and thermally conductive manner to the motor housing outer wall, and
- **in that** the air flow on the one hand flows directly past the stator in the motor housing interior and on the other hand flows past the outside of the motor housing outer wall in the air gap, and in each case absorbs heat losses from the external stator.

2. Electric motor (1) according to Claim 1,
**characterized in that** the motor housing outer wall has formed-out areas, which act as cooling elements, within the air gap and/or in areas which are adjacent to the air-gap opening.

3. Electric motor (1) according to one of Claims 1 or 2,
**characterized in that**
the external stator has individual stator teeth which are wound in the form of an individual-tooth winding, thus forming open slots between the stator teeth, through which the cooling air flow flows.

4. Electric motor (1) according to one of Claims 1 to 3,
**characterized in that** the rotor is an internal rotor with permanent magnet excitation.

5. Electric motor (1) according to one of Claims 1 to 4,
**characterized in that** at least one of the air-flow openings is arranged on an end face of the motor housing at essentially the same radial distance from the rotor axis as the winding of the stator.

6. Electric motor (1) according to one of Claims 3 or 4,
**characterized in that** at least one of the air-flow openings is arranged on an end face of the motor housing essentially at the same radial distance from the rotor axis as the slots between the stator teeth.

7. Electric motor (1) according to one of Claims 1 to 5,
**characterized in that** at least one motor housing part, which is thermally conductively connected to the external stator, is in the form of a light-metal die-casting.

8. Electric motor (1) according to one of Claims 1 to 7,
**characterized in that** the formed-out areas of the fan pot which act as air blades run in a straight line or curve in the radial direction and/or the axial direction on the inside of the fan pot, and are matched to the contour of the motor housing, a short distance away from it.

9. Electric motor (1) according to one of Claims 1 to 6,
**characterized in that** the electric motor is used as a drive of a cooling fan, and the fan pot is used as the hub of a fan wheel, wherein fan blades for producing the fan air flow are fitted on the outside of the fan pot.

## Revendications

1. Moteur électrique (1) composé :
- d'un rotor (32) entraîné en rotation autour d'un axe de rotor et d'un stator fixe dans l'espace intérieur d'un carter de moteur (3) et
- d'un réceptacle de ventilateur (8), le réceptacle de ventilateur (8) étant relié solidaire en rotation au rotor (32) et entourant au moins partiellement de manière cupuliforme le carter de moteur, de telle sorte qu'une lame d'air est formée d'une ouverture de la lame d'air entre la paroi extérieure du carter de moteur et la paroi du réceptacle de ventilateur, le carter de moteur présentant autant à l'extérieur qu'à l'intérieur de la lame d'air des ouvertures de ventilation et le réceptacle de ventilation présentant des moulures agissant comme des pales à air et étant disposées de telle sorte que, lorsque le rotor tourne, une différence de pression se forme entre l'ouverture de ventilation disposée hors de la lame d'air et l'ouverture de la lame d'air, qui produit un flux d'air,
**caractérisé par le fait**
- **que** le stator est un stator extérieur excité par voie électromagnétique, présentant un matériau en fer électromagnétiquement actif et un enroulement et étant relié solidaire en rotation et de manière thermoconductrice à la paroi extérieur du carter de moteur et
- **que** le flux d'air circule autant dans l'espace intérieur du carter de moteur directement au niveau du stator que dans la lame d'air sur la face extérieure de la paroi extérieure du carter de moteur et absorbe les pertes calorifiques du stator extérieur.

2. Moteur électrique (1) selon la revendication 1, **caractérisé par le fait que** la paroi extérieure du carter de moteur présente des moulures à l'intérieur de la lame d'air et/ou dans les zones adjacentes, agissant en tant qu'éléments de refroidissement.

3. Moteur électrique (1) selon l'une des revendications 1 ou 2, **caractérisé par le fait que** le stator extérieur présente des dents de stator individuelles enroulées à la façon d'un enroulement de dents individuelles, formant ainsi des fentes de rainure ouvertes entre les dents du stator, à travers lesquelles circule le flux d'air de refroidissement.

4. Moteur électrique (1) selon l'une des revendications 1 à 3, **caractérisé par le fait que** le rotor est un rotor intérieur excité par un aimant permanent.

5. Moteur électrique (1) selon l'une des revendications 1 à 4, **caractérisé par le fait que** au moins une des ouvertures de ventilation est disposée sur une face frontale du carter de moteur avec essentiellement la même distance radiale par rapport à l'axe du rotor que l'enroulement du stator.

6. Moteur électrique (1) selon l'une des revendications 3 à 4, **caractérisé par le fait que** au moins une des ouvertures de ventilation est disposée sur une face frontale du carter de moteur avec essentiellement la même distance radiale par rapport à l'axe du rotor que les fentes de rainure entre les dents du stator.

7. Moteur électrique (1) selon l'une des revendications 1 à 5, **caractérisé par le fait qu'**au moins un élément du carter moteur relié de manière thermoconductrice au stator extérieur est réalisé sous forme de pièce coulée en métal léger.

8. Moteur électrique (1) selon l'une des revendications 1 à 7, **caractérisé par le fait que** les moulures du réceptacle de ventilation agissant en tant que pales à air, s'étendent dans le sens radial et/ou axial de façon rectiligne ou incurvée sur la face intérieure du réceptacle de ventilation et sont adaptées à faible distance au contour du carter de moteur.

9. Moteur électrique (1) selon l'une des revendications 1 à 6, **caractérisé par le fait que** le moteur électrique est utilisé en tant qu'entraînement d'une soufflerie de refroidissement et le réceptacle de ventilation sert de moyeu d'une roue de soufflerie, les pales de soufflerie étant positionnées pour produire le flux d'air soufflé sur la face extérieure du réceptacle de ventilation.
